# EUROPÄISCHE PATENTANMELDUNG

(11) **EP 0 631 840 A1**
(43) Veröffentlichungstag der Anmeldung: **04.01.1995**
(21) Anmeldenummer: 94108517.7
(22) Anmeldetag: 03.06.1994
(51) Int. Cl.: B24B 5/04, B24B 41/02, B23Q 1/01

(54) **Rundschleifmaschine**

(30) Priorität: 28.06.1993 CH 1923/93
(71) Anmelder: Tschudin, Urs, CH-2540 Grenchen (CH)
(72) Erfinder: Tschudin, Urs, CH-2540 Grenchen (CH)
(74) Vertreter: EGLI-EUROPEAN PATENT ATTORNEYS

(57) **Zusammenfassung**

Eine Rundschleifmaschine weist ein Maschinenbett, einen angetriebenen Werkstückspindelstock (3) mit einem Vorschubantrieb und einen angetriebenen Schleifspindelstock (5) mit einem Vorschubantrieb auf. Das Maschinenbett ist als eine feststehende Platte (1) ausgebildet, die horizontal oder vertikal ausgerichtet sein kann. Ein Reitstock (9) ist mit einem Vorschubantrieb versehen, der unabhängig von den anderen Vorschubantrieben steuerbar ist.

## Beschreibung

Die Erfindung betrifft eine Rundschleifmaschine gemäss dem Oberbegriff des Patentanspruchs 1.

Eine solche Maschine ist bekannt aus der US-A-4 443 975. Darin ist eine Rundschleifmaschine beschrieben, bei der auf einem Maschinenbett ein Längsschlitten angebracht ist, auf dem ein Obertisch angeordnet ist zur Winkelverstellung. Ein angetriebener Werkstückspindelstock und ein Reitstock sind manuell verstellbar auf dem Obertisch befestigt. Der Längsschlitten ist verschiebbar auf Führungen angeordnet und mit einem Längsvorschubantrieb versehen. Die Führungen sind parallel zur Drehachse des zu bearbeitenden Werkstückes ausgerichtet. Senkrecht zur Drehachse sind weitere Führungen vorgesehen, auf denen ein Querschlitten verschiebbar angeordnet und mit einem Quervorschubantrieb versehen ist. Ein angetriebener Schleifspindelstock mit einer Schleifscheibe ist auf dem Querschlitten befestigt. Das Maschinenbett ist als ein Block ausgebildet und nimmt viel Platz ein. Der Aufbau der Maschine ist kompliziert.

Der Erfindung liegt die Aufgabe zugrunde, eine einfache und kostengünstige Rundschleifmaschine zu schaffen, die wenig Platz einnimmt.

Eine weitere Aufgabe der Erfindung ist es, eine Rundschleifmaschine zu schaffen, die von unten her beschickt werden kann.

Die genannte Aufgabe wird erfindungsgemäss durch die Merkmale des Patentanspruchs 1 gelöst. Überraschenderweise hat sich herausgestellt, dass bei der Verwendung einer Platte mit einem ausreichenden Gewicht als Maschinenbett anstatt des traditionellen Blockes die erforderliche Stabilität gewährleistet ist. Auf diese Weise wird sehr viel Platz gespart.

Vorteilhafte Weiterbildungen der Erfindung ergeben sich aus den Unteransprüchen.

In einer Ausführungsform der Erfindung ist die Platte horizontal auf einem Gestell angeordnet. Auf diese Weise können Nebenaggregate wie zum Beispiel Kühlmittelfilter platzsparend unter dem Maschinenbett plaziert werden.

In einer weiteren Ausführungsform der Erfindung ist die Platte vertikal angeordnet. So wird noch mehr Platz eingespart, und ausserdem eine einfache Beschickung der Maschine von unten her ermöglicht. Auch ist die Kühlung der Maschine ohne Beeinträchtigung des Maschinenbettes möglich. Die erfindungsgemässe Rundschleifmaschine ist damit sehr massgenau, bedienungs- und wartungsfreundlich.

In einer bevorzugten Ausführungsform der Erfindung umfasst der Längsvorschubantrieb einen ersten elektronisch steuerbaren Längsvorschubantrieb für den Werkstückspindelstock und einen zweiten elektronisch steuerbaren Längsvorschubantrieb für den Reitstock, wobei der erste Längsvorschubantrieb und der zweite Längsvorschubantrieb unabhängig steuerbar sind. Ein besonderer Vorteil dieser Ausführungsform ist darin zu sehen, dass durch die unabhängigen Längsvorschubantriebe nicht nur sämtliche erforderliche Funktionen, wie das Verstellen der Spitzenweite, das Spannen eines Werkstückes, das Einsteckschleifen, das Pendelschleifen, das Schleifen von Kegeln und Radien und so weiter einfach ausführbar sind, sondern auch ein einfacher Aufbau möglich ist: Tisch und Obertisch sowie die komplizierte Anordnung der kombinierten Schlitten sind überflüssig. Weiterhin ist die erfindungsgemässe Rundschleifmaschine wartungsfreundlich, da die Längsvorschubantriebe grösstenteils identisch ausgeführt sein können. Auch ist sie besonders stabil, weil sie keine komplizierte Anordnung kombinierter Schlitten aufweist. Dies ist insbesondere bei der Verwendung von CBN-Scheiben und bei der Bearbeitung von keramischen Werkstoffen von Vorteil.

In einer weiteren Ausführungsform der Erfindung ist unter dem Werkstückspindelstock und dem Reitstock ein in Richtung der Drehachse verlaufendes Ladeband angeordnet. Dies gewährleistet auf platzsparende Weise eine effiziente Zu- und Abführung der zu bearbeitenden Werkstücke.

In einer weiteren Ausführungsform der Erfindung weist der Schleifspindelstock einen Greifer auf zum Abheben eines Werkstückes vom Ladeband und zum Plazieren des Werkstückes zwischen dem Werkstückspindelstock und dem Reitstock. So können grössere Werkstücke bearbeitet werden.

In einer weiteren Ausführungsform der Erfindung ist ein Abheber vorgesehen zum Anheben vom Ladeband und zum Halten eines Werkstückes von unten her und zum Plazieren des Werkstückes zwischen dem Werkstückspindelstock und dem Reitstock. Das hat den Vorteil, dass beim Halten des Werkstückes im Abheber dessen Gewicht ausgenützt wird.

Einige Ausführungsbeispiele der Erfindung sind nachstehend anhand der Zeichnungen näher erläutert. Es zeigen:
- Figur 1: eine Frontansicht einer erfindungsgemässen Rundschleifmaschine,
- Figur 2: eine Seitenansicht der Rundschleifmaschine nach Figur 1,
- Figur 3: eine Frontansicht einer erfindungsgemässen Spitzenlosrundschleifmaschine,
- Figur 4: eine Frontansicht einer weiteren Rundschleifmaschine gemäss der Erfindung und
- Figur 5: eine Seitenansicht der Rundschleifmaschine nach Figur 4.

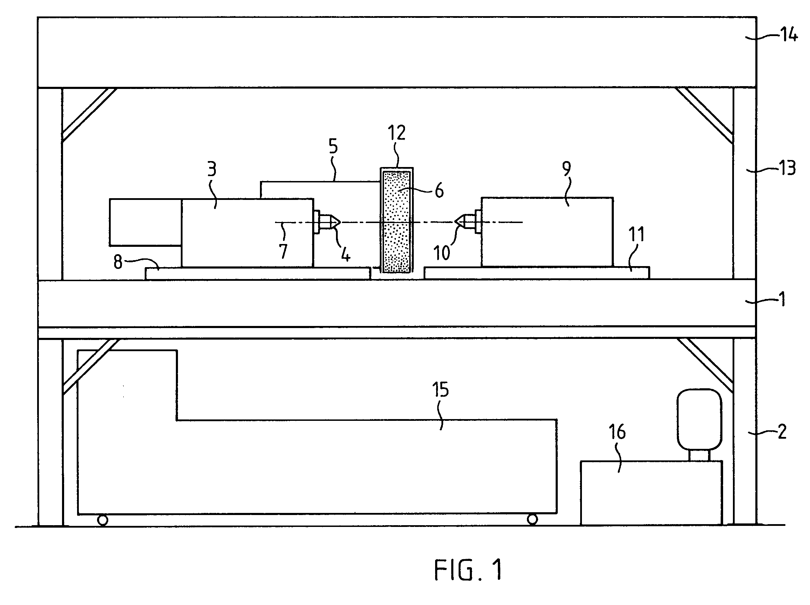

In Figur 1 ist eine Frontansicht einer Rundschleifmaschine gemäss der Erfindung wiedergegeben. Die Maschine weist eine feststehende Platte 1 als Maschinenbett auf, die auf einem Gestell 2 angeordnet ist. Ein Werkstückspindelstock 3 zum Halten eines Werkstückes und zum Drehen des Werkstückes um eine Drehachse 7 ist mit einer angetriebenen Spitze 4 versehen und auf der Platte 1 angeordnet. Ein Schleifspindelstock 5 zum Schleifen des Werkstückes ist auch auf der Platte 1 angeordnet und mit einer angetriebenen Schleifscheibe 6 versehen, die von einem Schleifscheibenschutz 12 umgeben ist. Der Werkstückspindelstock 3 weist einen Längsvorschubantrieb auf zum Verschieben des Werkstückspindelstockes in Richtung der Drehachse 7 über eine Führung 8. Der Schleifspindelstock 5 weist einen Quervorschubantrieb auf zum Verschieben des Schleifspindelstockes senkrecht zur Drehachse 7. Weiter ist ein Reitstock 9 mit einer Spitze 10 vorgesehen zum Gegenhalten des Werkstückes. Die Drehachse 7 ist die Symmetrieachse der Spitze 10. Die Spitze 10 des Reitstockes 9 ist nicht angetrieben. Der Reitstock 9 ist mit einem Längsvorschubantrieb zum Verschieben des Reitstockes in Richtung der Drehachse 7 über eine Führung 11 versehen. Auf der Platte 1 ist ein weiteres Gestell 13 vorgesehen, auf dem ein Kasten 14 mit Geräten zur Steuerung des Werkstückspindelstockes 3, des Schleifspindelstockes 5, des Reitstockes 9 und deren jeweiligen Vorschubantrieben angeordnet ist. Das Gestell 13 kann hohl sein, sodass Verbindungsleitungen zwischen dem Kasten 14 und den zu steuernden Geräten darin Platz haben. Unter der Platte 1 sind ein Papierbandfilter 15 und ein Hydraulikgerät 16 plaziert.

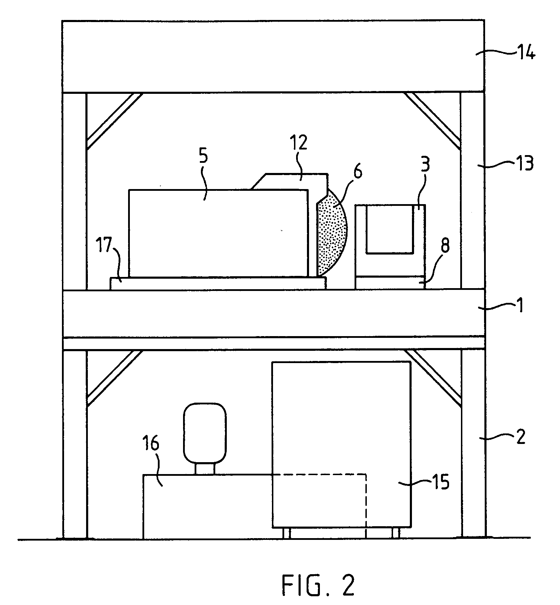

Figur 2 zeigt zur Verdeutlichung eine Seitenansicht der in Figur 1 gezeigten Rundschleifmaschine. Übereinstimmende Teile sind mit den gleichen Bezugszeichen wie in der Figur 1 bezeichnet. Der Schleifspindelstock 5 kann längs einer Führung 17 verschoben werden.

Das Maschinenbett besteht aus einem schweren, festen Material, zum Beispiel Granit oder einer anderen geeigneten Steinsorte, oder auch aus Stahl, Eisen, oder einem anderen geeigneten Metall. Konventionelle Rundschleifmaschinen weisen ein Maschinenbett auf, dass als ein Block ausgeführt ist. Es hat sich nun überraschenderweise herausgestellt, dass bei der Verwendung einer Platte mit einem ausreichenden Gewicht als Maschinenbett anstatt des traditionellen Blockes die erforderliche Stabilität gewährleistet ist, sodass sehr viel Platz erspart wird. Unter dem Maschinenbett können Nebenaggregate wie zum Beispiel Kühlmittelfilter 15 und Hydraulikgerät 16 platzsparend untergebracht werden.

Die Längsvorschubantriebe zum Verschieben des Werkstückspindelstockes 3 und des Reitstockes 9 in Richtung der Drehachse 7 sind elektronisch steuerbar, und zwar unabhängig voneinander. Somit sind sämtliche erforderliche Funktionen wie das Verstellen der Spitzenweite, das Spannen eines Werkstückes, das Einsteckschleifen, das Pendelschleifen, das Schleifen von Kegeln und Radien und so weiter einfach ausführbar. Konventionelle Rundschleifmaschinen sind mit einem angetriebenen Längsschlitten und mit einem Obertisch zur Winkelverstellung ausgestattet, die in Richtung der Drehachse bewegt werden können und auf dem sowohl der Werkstückspindelstock als auch der Reitstock befestigt sind. Alle Funktionen dieser konventionellen Rundschleifmaschinen mit Längsschlitten und Obertisch sind bei der erfindungsgemässen Maschine möglich durch die identische Ansteuerung der beiden Längsvorschubantriebe. Der Werkstückspindelstock 3 und der Reitstock 9 und somit auch das gehaltene Werkstück führen dann die gleiche Bewegung aus. Weitere Funktionen wie das Verstellen der Spitzenweite oder das Spannen eines Werkstückes, sind durch die unterschiedliche Ansteuerung der beiden Längsvorschubantriebe vereinfacht. Auch ist der Aufbau kostengünstiger und einfacher im Vergleich zu bekannten Rundschleifmaschinen: Längsschlitten und Obertisch sowie die komplizierte Anordnung der kombinierten Schlitten sind überflüssig. Ausserdem ist die erfindungsgemässe Rundschleifmaschine sehr wartungsfreundlich, da die Längsvorschubantriebe grösstenteils identisch ausgeführt werden können. Weiterhin ist sie besonders stabil, weil sie keine komplizierte Anordnung kombinierter Schlitten aufweist. Dies ist insbesondere bei der Verwendung von CBN-Scheiben und bei der Bearbeitung von keramischen Werkstoffen von Vorteil. Das Schleifen von Kegeln und Radien erfolgt durch Interpolation. Dabei werden die Vorschubbewegungen des Schleifspindelstockes 5 einerseits und des zwischen dem Werkstückspindelstock 3 und dem Reitstock 9 gehaltenen Werkstückes andererseits so gesteuert, dass die gewünschte Form geschliffen wird. Dadurch ist Winkelverstellung überflüssig und braucht die Rundschleifmaschine keinen Obertisch. Es sei darauf hingewiesen, dass, obwohl die unabhängig steuerbaren Längsvorschubantriebe in Verbindung mit dem plattenförmigen Maschinenbett besonders vorteilhaft sind, sie auch unabhängig davon angewendet werden können.

Eine in den Figuren 1 und 2 gezeigte Rundschleifmaschine, bei der der Schleifspindelstock 5 mit Mitteln zum Schleifen von Gewinden am Werkstück ausgestattet ist, ergibt eine Gewindeschleifmaschine gemäss der Erfindung.

Eine in den Figuren 1 und 2 gezeigte Rundschleifmaschine mit folgenden Merkmalen ergibt eine Innenrundschleifmaschine gemäss der Erfindung. Der Werkstückspindelstock 3 ist geeignet zur Aufnahme des Werkstückes. Der Schleifspindelstock 5 ist an Stelle des Reitstockes 9 angeordnet und weist eine oder mehrere Schleifspindeln auf, deren Drehachse zum Beispiel parallel zur Drehachse 7 des Werkstückspindelstockes 3 verläuft. Mittels des Schleifspindelstockes 5 schleift die Maschine die Innenseite des von dem Werkstückspindelstock 3 gehaltenen Werkstückes.

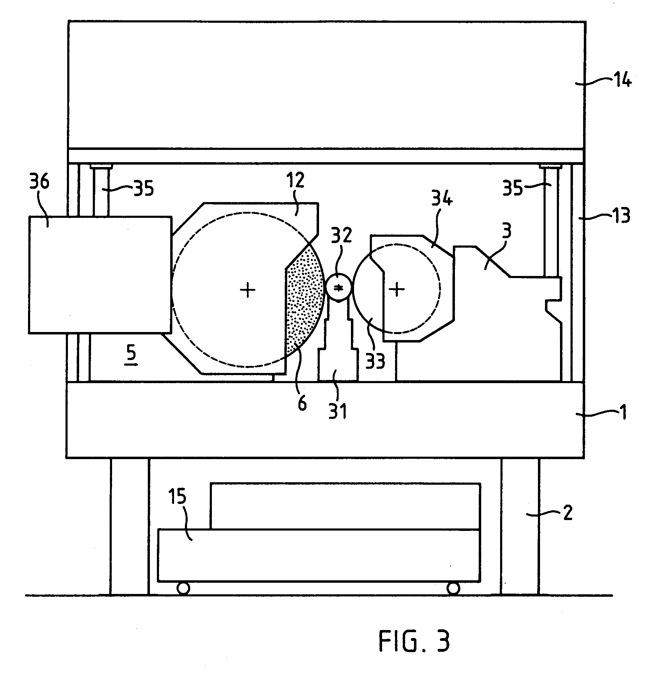

In Figur 3 ist eine Frontansicht einer Spitzenlosrundschleifmaschine gemäss der Erfindung wiedergegeben. Übereinstimmende Teile sind mit den gleichen Bezugszeichen wie in den anderen Figuren bezeichnet. Es ist eine Werkstückauflage 31 vorgesehen zum Halten eines Werkstückes 32. Der Werkstückspindelstock 3 ist ein Regelspindelstock und weist eine Regelscheibe 33 auf, die in einer Schutzhaube 34 angeordnet ist. Der Regelspindelstock 3 ist zum Drehen des Werkstückes 32 geeignet, wobei der Schleifspindelstock 5 mittels der Schleifscheibe 6, die viel schneller dreht als der Regelspindelstock, das Werkstück 32 bearbeitet. Der Kasten 14 mit Geräten zur Steuerung des Werkstückspindelstockes 3, des Schleifspindelstockes 5 und deren jeweiligen Vorschubantrieben ist durch Verbindungsleitungen 35 mit den zu steuernden Geräten verbunden. Die Steuerung kann zum Beispiel von einem Bildschirm 36 aus vorgenommen werden, der auch, in nicht gezeigter Weise, an der Platte 1 befestigt ist.

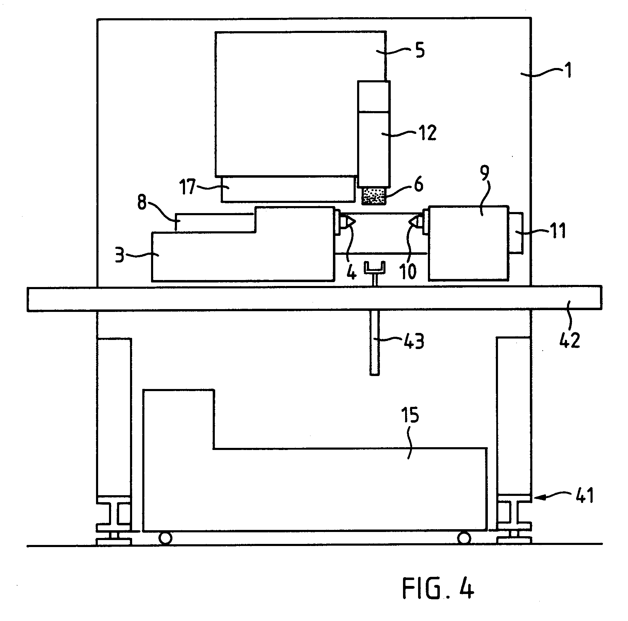

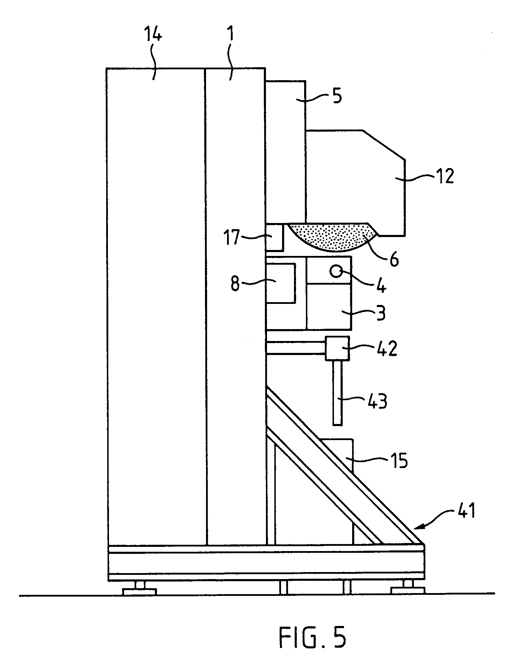

Die Figuren 4 und 5 zeigen eine Frontansicht beziehungsweise eine Seitenansicht einer weiteren Rundschleifmaschine gemäss der Erfindung. Wiederum sind übereinstimmende Teile mit den gleichen Bezugszeichen wie in den anderen Figuren bezeichnet. Das Maschinenbett ist als eine vertikale Platte 1 ausgebildet, sodass noch viel mehr Platz gespart wird. Die Platte ist auf einem Ständer 41 abgestützt. Der Werkstückspindelstock 3, der Schleifspindelstock 5 und der Reitstock 9 sind mit ihren jeweiligen Vorschubantrieben verschiebbar auf jeweiligen Führungen 8, 17 und 11 an der Platte 1 angeordnet. Die jeweiligen Vorschubantriebe sind wiederum unabhängig elektronisch steuerbar. Auch in dieser sehr kompakten und platzsparenden Ausführungsform sind damit alle erforderlichen Funktionen gewährleistet. Der Kasten 14 mit den Steuergeräten ist hinter der Platte angeordnet. Die nicht gezeigten Verbindungsleitungen können durch die Platte 1 geführt werden und/oder um die Platte 1 herum. Bei der Kühlung der Rundschleifmaschine fällt die Kühlflüssigkeit senkrecht herunter und berührt dadurch das Maschinenbett nicht. Somit tritt keine zusätzliche Erwärmung des Maschinenbettes auf, und die Masshaltigkeit der Rundschleifmaschine wird erhöht. Wie im folgenden erläutert wird, ist ausserdem eine einfache Beschickung der Maschine von unten her möglich. Damit ist die erfindungsgemässe Rundschleifmaschine auch sehr bedienungsfreundlich. Unter dem Werkstückspindelstock 3 und dem Reitstock 9 ist in Richtung der Drehachse 7 verlaufend ein Ladeband 42 angeordnet zur Gewährleistung einer effizienten Zu- und Abführung der zu bearbeitenden Werkstücke. Der Schleifspindelstock 5 kann einen Greifer zum Abheben eines Werkstückes vom Ladeband 42 und zum Plazieren des Werkstückes zwischen dem Werkstückspindelstock 3 und dem Reitstock 9 aufweisen, sodass grössere Werkstücke bearbeitet werden können. In einer anderen Ausführungsform ist ein Abheber 43 vorgesehen zum Abheben vom Ladeband 42 und zum Halten eines Werkstückes von unten her und zum Plazieren des Werkstückes zwischen dem Werkstückspindelstock 3 und dem Reitstock 9. Somit wird beim Halten des Werkstückes im Abheber 43 dessen Gewicht ausgenützt.

Die vertikale Anordnung gemäss der Erfindung ist sowohl bei der Spitzenrundschleifmaschine als auch bei der Spitzenlosrundschleifmaschine, der Innenrundschleifmaschine und der Gewindeschleifmaschine anwendbar.

## Patentansprüche

1. Rundschleifmaschine mit einem Maschinenbett, einem angetriebenen Werkstückspindelstock (3) zum Drehen eines Werkstückes um eine Drehachse (7), einem angetriebenen Schleifspindelstock (5) zum Schleifen des Werkstückes und einem Vorschubantrieb zum relativen Verschieben des Werkstückes und des Schleifspindelstockes (5), **dadurch gekennzeichnet, dass** das Maschinenbett als eine feststehende Platte (1) ausgebildet ist, an der der Werkstückspindelstock (3), der Schleifspindelstock (5) und der Vorschubantrieb befestigt sind.

2. Rundschleifmaschine nach Anspruch 1, **dadurch gekennzeichnet, dass** die Platte (1) horizontal auf einem Gestell (2) angeordnet ist.

3. Rundschleifmaschine nach Anspruch 1, **dadurch gekennzeichnet, dass** die Platte (1) vertikal angeordnet ist.

4. Rundschleifmaschine nach einem der Ansprüche 1 bis 3, **dadurch gekennzeichnet, dass** die Rundschleifmaschine eine Innenrundschleifmaschine ist bei der der Werkstückspindelstock (3) geeignet ist zur Aufnahme des Werkstückes und der Schleifspindelstock (5) eine oder mehrere Schleifspindeln aufweist, deren Drehachse parallel zur Drehachse (7) des Werkstückspindelstockes (3) verläuft.

5. Rundschleifmaschine nach einem der Ansprüche 1 bis 3, **dadurch gekennzeichnet, dass** der Schleifspindelstock (5) eine Schleifscheibe (6) aufweist und der Vorschubantrieb einen Längsvorschubantrieb zum relativen Verschieben des Werkstückes und der Schleifscheibe (6) in Richtung der Drehachse (7) und einen Quervorschubantrieb zum relativen Verschieben des Werkstückes und der Schleifscheibe (6) senkrecht zur Drehachse (7) umfasst.

6. Rundschleifmaschine nach Anspruch 5, **dadurch gekennzeichnet, dass** die Rundschleifmaschine eine Spitzenlosrundschleifmaschine ist mit einer Werkstückauflage (31) und der Werkstückspindelstock (3) ein Regelspindelstock ist und eine Regelscheibe (33) aufweist.

7. Rundschleifmaschine nach Anspruch 5, **dadurch gekennzeichnet, dass** die Rundschleifmaschine eine Spitzenrundschleifmaschine ist und ein Reitstock (9) vorgesehen ist, der zusammen mit dem Werkstückspindelstock (3) zur Aufnahme des Werkstückes geeignet ist.

8. Rundschleifmaschine nach Anspruch 7, **dadurch gekennzeichnet, dass** die Spitzenrundschleifmaschine eine Gewindeschleifmaschine ist.

9. Rundschleifmaschine nach Anspruch 7 oder 8, **dadurch gekennzeichnet, dass** der Längsvorschubantrieb einen ersten elektronisch steuerbaren Längsvorschubantrieb für den Werkstückspindelstock (3) und einen zweiten elektronisch steuerbaren Längsvorschubantrieb für den Reitstock (9) umfasst, wobei der erste Längsvorschubantrieb und der zweite Längsvorschubantrieb unabhängig steuerbar sind.

10. Rundschleifmaschine nach Anspruch 3 und Anspruch 7, **dadurch gekennzeichnet, dass** unter dem Werkstückspindelstock (3) und dem Reitstock (9) ein in Richtung der Drehachse (7) verlaufendes Ladeband (42) angeordnet ist.

11. Rundschleifmaschine nach Anspruch 10, **dadurch gekennzeichnet, dass** der Schleifspindelstock (5) einen Greifer aufweist zum Abheben eines Werkstückes vom Ladeband (42) und zum Plazieren des Werkstückes zwischen dem Werkstückspindelstock (3) und dem Reitstock (9).

12. Rundschleifmaschine nach Anspruch 10, **dadurch gekennzeichnet, dass** ein Abheber (43) vorgesehen ist zum Abheben vom Ladeband (42) und zum Halten eines Werkstückes von unten her und zum Plazieren des Werkstückes zwischen dem Werkstückspindelstock (3) und dem Reitstock (9).

13. Rundschleifmaschine nach Anspruch 1, **dadurch gekennzeichnet, dass** die Platte (1) aus Granit besteht.
